# EUROPEAN PATENT APPLICATION

(11) **EP 1 061 555 A1**
(43) Date of publication of application: **20.12.2000**
(21) Application number: 00305140.6
(22) Date of filing: 16.06.2000
(51) Int. Cl.: H01J 63/06, H01J 9/24

(54) **White light source using carbon nanotubes and fabrication method thereof**

(30) Priority: 18.06.1999 KR 9923051; 02.06.2000 KR 0030354
(71) Applicant: Iljin Nanotech Co., Ltd., Seoul (KR); Lee, Cheol-jin, Gunsan-city, Jeonlabuk-do (KR); Cho, Young-sang, Incheon (KR)
(72) Inventor: Lee, Cheol-jin, Gunsan-city, Jeonlabuk-do (KR); Cho, Young-sang, 602-1008 New Seoul Apt., Incheon (KR); Yoo, Jae-eun, 106-1001 Kyungnam Apt., Seoul (KR)
(74) Representative: Stuttard, Garry Philip

(57) **Abstract**

A white light source using carbon nanotubes and a method of fabricating the same are provided. The white light source includes a metal film (200) which is used as a cathode and formed on a lower substrate (100), a conductive polymer film pattern (400) formed on the metal film, carbon nanotubes (500) which are substantially vertically bound with the conductive polymer film pattern such that one end thereof is exposed above the surface of the conductive polymer film pattern, for emitting electrons, spacers (600) installed on the metal film, and a transparent upper substrate (700) which has a transparent electrode (800), to which a fluorescent body (900) is attached, and is mounted on the spacers such that the fluorescent body faces the carbon nanotubes.

## Description

### BACKGROUND OF THE INVENTION

### 1. Field of the Invention

The present invention relates to a white light source, and more particularly, to a method of manufacturing a white light source having an excellent luminous efficacy.

### 2. Description of the Related Art

A representative white light source is a fluorescent lamp. The fluorescent lamp uses the emission of light by a fluorescent body due to a discharge effect. This fluorescent lamp has the drawback of low luminance. Moreover, it is difficult to miniaturize the fluorescent lamp and to make the fluorescent lamp operate with low operating voltage. In addition, as use time lapses, the luminance of the fluorescent lamp decreases. Consequently, the stability and reliability of the fluorescent lamp are degraded, and the life span is short.

### SUMMARY OF THE INVENTION

To solve the above problems, a feature of the present invention is to provide a white light source having an excellent electric field electron emission efficiency to thereby obtain a large emission current even at a low applied voltage, and having a very high density of electron emitters per unit area to thereby exhibit excellent luminous efficacy, and a fabrication method thereof.

In order to achieve the above feature, the present invention provides a white light source including a metal film used as a cathode, the metal film being formed on a lower substrate; a conductive polymer film pattern formed on the metal film; carbon nanotubes for emitting electrons, the carbon nanotubes being substantially vertically bound with the conductive polymer film pattern such that one end thereof is exposed above the surface of the conductive polymer film pattern; spacers installed on the metal film; and a transparent upper substrate on which a transparent electrode, to which a fluorescent body is attached, is formed, the transparent upper substrate being mounted on the spacers such that the fluorescent body faces the carbon nanotubes.

The fluorescent body is formed of (3Ca₃(PO₄)₂CaFCl/Sb,Mn), generating a white luminescence, or Y₂O₃:Eu, CeMaA₁₁O₁₉:Tb and BaMg₂Al₁₆O₇:Eu, to generate a white luminescence based on three combined emission spectrums.

The present invention also provides a method of fabricating a white light source. A metal film used as a cathode is formed on a lower substrate. An insulation film pattern having a plurality of openings selectively exposing the metal film is formed on the metal film. The openings are filled with a conductive polymer film pattern. Carbon nanotubes are scattered on the openings and sunken in the conductive polymer film pattern such that the carbon nanotubes vertically stand with one end exposed. The conductive polymer film pattern is hardened to bind the sunken carbon nanotubes with the conductive polymer film pattern. Spacers are installed on the insulation film pattern. A transparent upper substrate having a transparent electrode, to which a fluorescent body is attached, is mounted on the spacers such that the fluorescent body faces the carbon nanotubes, and the transparent upper substrate is sealed with the lower substrate.

The carbon nanotubes may be scattered on the openings by applying direct current bias or supersonic waves to the lower substrate. The fluorescent body is formed of (3Ca₃(PO₄)₂CaFCl/Sb,Mn) generating a white luminescence, or Y₂O₃:Eu, CeMaA₁₁O₁₉:Tb and BaMg₂Al₁₆O₇:Eu to generate a white luminescence based on three combined emission spectrums.

According to the present invention, a white light source having excellent luminous efficacy can be provided.

### BRIEF DESCRIPTION OF THE DRAWINGS

The above feature and advantages of the present invention will become more apparent by describing in detail preferred embodiments thereof with reference to the attached drawings in which
FIG. 1 is a schematic sectional view for explaining a white light source according to an embodiment of the present invention: and
FIGS. 2 through 7 are schematic sectional views for explaining a method of fabricating a white light source according to the embodiment of the present invention.

### DETAILED DESCRIPTION OF THE INVENTION

Hereinafter, an embodiment of the present invention will be described in detail with reference to the attached drawings. The present invention is not restricted to the following embodiment, and many variations are possible within the sprit and scope of the present invention. The embodiment of the present invention is provided in order to more completely explain the present invention to anyone skilled in the art. In the drawings, the shapes of members are exaggerated for clarity and the same reference numerals denote the same members. Also, when a film is described as being on another film or a semiconductor substrate, it can be directly on the other layer or the semiconductor substrate or an interlayer film can exist therebetween.

The present invention provides a white light source using carbon nanotubes and a method of fabricating the same. It is known that a carbon nanotube is microscopically constituted such that a single carbon element is combined with three neighboring carbon atoms, a hexagonal ring is formed by the combination among the carbon atoms, and a plane composed of repeated hexagonal rings like a honeycomb is rolled to thereby form a cylindrical shape. The cylindrical structure is characterized by the diameter being usually several nanometers through several tens of nanometers, and the length being several tens through several thousands of times longer than the diameter.

Accordingly, the tip of a carbon nanotube has a diameter of several nanometers through several tens of nanometers, thereby realizing very high electric field electron emission efficiency. Therefore, a large amount of emission current can be obtained at a low applied voltage. In addition, carbon nanotubes can be aligned with a very high density per unit area so that a very high tip density can be achieved, thereby obtaining excellent luminous efficacy

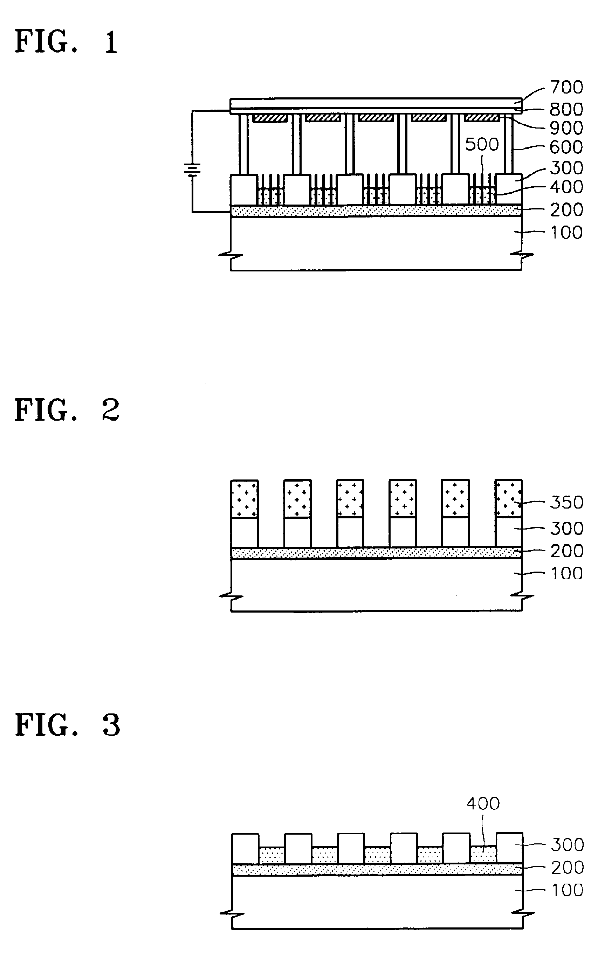

FIG 1 is a schematic sectional view for explaining a white light source according to an embodiment of the present invention. Referring to FIG. 1, the white light source according to the embodiment of the present invention includes a metal film 200, used as a cathode, and a conductive polymer film pattern 400 on a lower substrate 100, and carbon nanotubes 500 vertically or obliquely planted in the conductive polymer film pattern 400.

The lower substrate 100 may be formed of silicon (Si), alumina (Al₂O₃), quartz or glass, but it is preferable that the lower substrate 100 is formed of glass which is suitable for a sealing process of completing a white light source. Since the metal film 200 serves to transmit current to the conductive polymer film pattern 400 bearing the carbon nanotubes 500, it is preferable that the metal film 200 is formed of a material of excellent conductivity. For example, the metal film 200 may be formed of a conductive material, for example, chrome (Cr), titanium (Ti), nitride titanium (TiN), tungsten (W) or aluminum (Al). However, since the conductive polymer film pattern 400 also exhibits conductivity, the metal film 200 can be omitted as necessary.

The conductive polymer film pattern 400 is sectioned in a predetermined pattern by an insulation film pattern 300. Accordingly, the carbon nanotubes 500 planted in the sectioned conductive polymer film pattern 400 are also grouped. Each group of carbon nanotubes 500 may constitute a single cell.

The carbon nanotubes 500 are planted in the conductive polymer film pattern 400 such that the tips of the carbon nanotubes 500 are exposed above the surface of the conductive polymer film pattern 400, and point toward the surface of a transparent electrode 800 used as an anode. An electric field applied to the transparent electrode 800 and the metal film 200 causes the electric field to concentrate at the tips of the carbon nanotubes 500, and thus electrons are emitted from the tips of the carbon nanotubes 500.

The emitted electrons collide with a fluorescent body 900, which is attached to the transparent electrode 800 to face the carbon nanotubes 500, and thus the fluorescent body 900 radiates light. The fluorescent body 900 is patterned to have a predetermined shape. The transparent electrode 800 is formed of a transparent conductive material such as indium tin oxide (ITO) and is attached to a transparent substrate 700 formed of glass. The fluorescent body 900 may be formed of a fluorescent material, for example, (3Ca₃(PO₄)₂CaFCl/Sb,Mn), generating a white luminescence, or a combination of fluorescent materials including, for example, Y₂O₃:Eu, CeMaA₁₁O₁₉:Tb and BaMg₂Al₁₆O₇:Eu, to generate a white luminescence based on the three combined emission spectrums.

The carbon nanotubes 500 are separated by a predetermined distance from the fluorescent body 900 by spacers 600 which are installed on the insulation film pattern 300. Each of the spacers 600 has a length of about 100-700 µm. The transparent substrate 700 is mounted on the spacers 600. For installation of the spacers 600, the fluorescent body 900 is patterned such that portions, at which the spacers 600 contact the transparent electrode 800, are exposed. The transparent substrate 700, to which the transparent electrode 800 is attached, is mounted on the spacers 600 and vacuum sealed with the lower substrate 100.

Since the diameter of the tip of each carbon nanotube 400 is very small - on average, several nanometers through several tens of nanometers, in an extreme case, as small as an atom, compared to the length of the carbon nanotube 400, electrons can be very effectively emitted from the tips in the presence of an applied electrical field. In other words, even if low voltage is applied between the metal film 200 or the conductive polymer film pattern 400 and the transparent electrode 800, a very high electric field can be formed at the tips of the carbon nanotubes 500 so that very effective emission of electrons can be achieved. In addition, since the carbon nanotubes 500 can be planted at very high density per unit area, the emission current caused by the electrons emitted from these carbon nanotubes 500 is very high.

The emitted electrons are transferred to the transparent electrode 800 by the electric field, which is applied between the transparent electrode 800, used as an anode, and the metal film 200 or the conductive polymer film pattern 400, used as a cathode. As the electrons collide with the fluorescent body 900, electrons in the fluorescent body 900 are excited to a high energy level and then de-excited to a lower energy level by emitting photons, thereby allowing the fluorescent body 900 to radiate light. The radiated light is emitted out through the transparent substrate 700. Here, as described above since the electron emission efficiency is high and the emission current due to the emitted electrons is also high, the current of electrons striking the fluorescent body 900 is very large. Accordingly, the luminance generated in the fluorescent body 900 is very high.

Although the white light source according to the embodiment of the present invention is substantially very simple and compact, it can emit white light with very high luminance, as described above. In addition, since it has a high electron emission efficiency, it can operate with very small voltage or very low current. Accordingly, this white light source can be used as a general illumination system, and if it is extremely miniaturized, it can be used as a portable one.

With reference to FIGS. 2 through 7, a method of fabricating the white light source according to the embodiment of the present invention as described above, will be described in detail.

FIG. 2 schematically shows the step of forming the conductive polymer film pattern 400 on the lower substrate 100. The metal film 200 used as a cathode is thinly formed on the lower substrate 100 having a large area for mass production. The lower substrate 100 may be formed of silicon, alumina, quartz or glass, but it is preferable that it is formed of glass to be suitable for sealing a white light source. The metal film 200 is formed by depositing a material of excellent conductivity, for example, chrome, titanium, nitride titanium, tungsten or aluminum, to a thickness of about 0.3-0.8 µm. The deposition is performed by a method of forming a thin film such as a thermal deposition method or a sputtering method.

An insulation film is deposited on the metal film 200 to a thickness of about 1.0-4.0 µm using an insulation material such as silicon oxide. The insulation film is deposited at a low temperature, for example, of below about 500°C, when the lower substrate 100 is formed of glass. This is for preventing deformation of the lower substrate 100 during the deposition of the insulation film.

Thereafter, the insulation film is patterned by photolithography, thereby forming the insulation film pattern 300 selectively exposing the underlying metal film 200. For example, photoresist is deposited to a thickness of about 1.5-2.0 µm and exposed and developed, thereby forming a photoresist pattern 350 selectively exposing the insulation film. Thereafter, the insulation film is selectively etched using the photoresist pattern 350 as an etching mask, thereby forming the insulation film pattern 300 selectively exposing the underlying metal film 200. The openings of the insulation film pattern 300 may be microscopic holes having a diameter of about 1-10 µm. The distance between the holes may be 3.0-15.0 µm. Then, the photoresist pattern 350 is removed by a stripping process.

FIG. 3 schematically shows the step of filling the insulation film pattern 300 with the conductive polymer film pattern 400. The microscopic holes of the insulation film pattern 300 are filled with liquid conductive polymer to contact the metal film 200 exposed by the insulation film pattern 300, thereby forming the conductive polymer film pattern 400. It is preferable that each of the openings is half filled with the conductive polymer. Accordingly, the conductive polymer film pattern 400 may be formed to a thickness of about 1-2 µm.

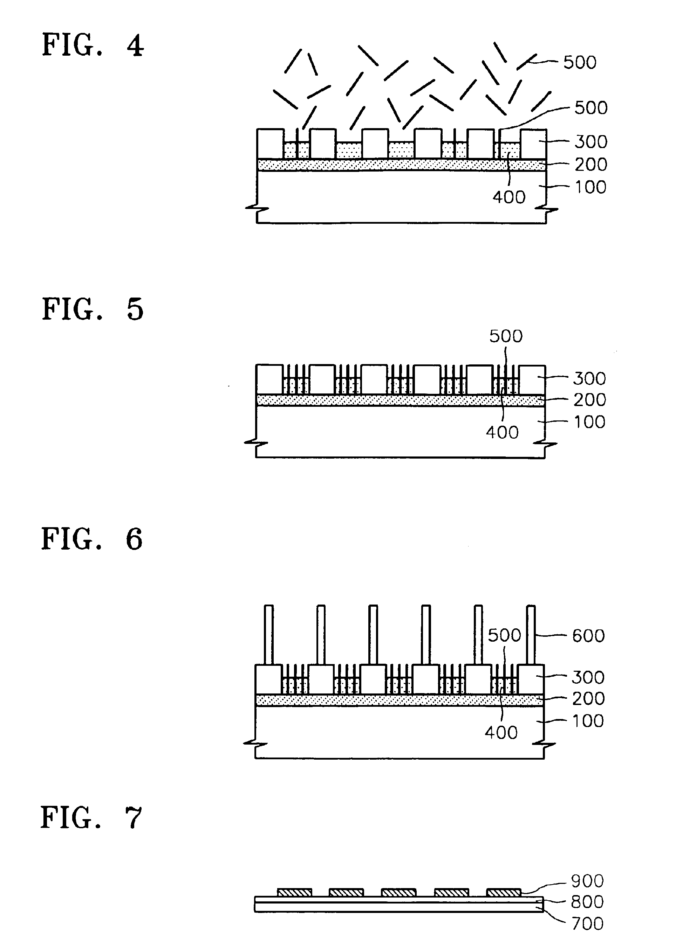

FIG. 4 schematically shows the step of planting the carbon nanotubes 500 in the conductive polymer film pattern 400. The carbon nanotubes 500 are scattered on and sunken in the conductive polymer film pattern 400. Here, since the carbon nanotubes 500 have a longish shape, most of them drop with one end directing downward. Accordingly, one end of the carbon nanotubes 500 first contacts the conductive polymer film pattern 400, and thus the carbon nanotubes 500 vertically sink into the conductive polymer film 400.

Since the microscopic openings filled with the conductive polymer film pattern 400 have a microscopic diameter of about 1-10 µm, the carbon nanotubes 500 obliquely or horizontally dropping are caught by the insulation film pattern 300. The carbon nanotubes 500 caught by the insulation film pattern 300 are slanted to one side and, substantially, vertically sunken in the conductive polymer film pattern 400.

To allow the carbon nanotubes 500 caught by the insulation film pattern 300 to be smoothly sunken in the conductive polymer film pattern 400, the lower substrate 100 may be shaken, or vibrated by supersonic waves. Alternatively, the carbon nanotubes 500 can be guided to be vertically sunken in the conductive polymer film pattern 400 by applying direct current (DC) bias to the lower substrate 100. By applying vibration or DC bias, the carbon nanotubes 500 caught by the insulation film pattern 300 can be vertically sunken in the conductive polymer film pattern 400. In other words the carbon nanotubes 500 are sunken in the conductive polymer film pattern 400 such that the tips thereof look directly or obliquely upward. The other ends of the carbon nanotubes 500 are exposed above the surface of the conductive polymer film pattern 400.

Meanwhile, it is preferable to scatter the carbon nanotubes 500 in a uniform density per unit area. For this purpose, a screen (not shown) is provided on the conductive polymer film pattern 400. The screen is shaken or vibrated after putting the carbon nanotubes 500 on the screen so that the carbon nanotubes 500 can be scattered through the holes of the screen. The holes of the screen are formed in a uniform density so that the carbon nanotubes 500 scattered through the holes can also be sunken in the conductive polymer film pattern 400 in a uniform density.

FIG. 5 schematically shows the step of hardening the conductive polymer film pattern 400 to bond the sunken carbon nanotubes 500. The conductive polymer film pattern 400 is hardened using the hardening characteristic of polymers constituting the conductive polymer film pattern 400. For example, when the conductive polymer film pattern 400 is composed of thermoset polymers, a hardening reaction is performed at a low temperature, for example, of below about 300°C to harden the conductive polymer film pattern 400. As a result, the sunken carbon nanotubes 500 are bound with the conductive polymer film pattern 400.

FIG. 6 schematically shows the step of installing the spacers 600 on the insulation film pattern 300. A plurality of spacers 600 of a length of about 100-700 µm are mounted on the insulation film pattern 300.

FIG. 7 schematically shows the step of forming the transparent electrode 800 and the fluorescent body 900 on the separated transparent substrate 700.

The transparent electrode 800 used as an anode is attached to the separated transparent substrate 700, for example, a glass substrate. The transparent electrode 800 is formed of a transparent conductive material such as ITO. Thereafter, the fluorescent body 900 is attached to the transparent electrode 800. The fluorescent body 900 may be formed of a fluorescent material, for example, (3Ca₃(PO₄)₂CaFCI/Sb,Mn), generating a white luminescence or fluorescent materials including, for example, Y₂O₃:Eu, CeMaA₁₁O₁₉:Tb and BaMg₂Al₁₆O₇:Eu, to generate a white luminescence based on combined emission spectrums. The fluorescent body 900 may be patterned to allow the spacers 600 to contact the transparent electrode 800.

The separated substrate 700 having the fluorescent body 900 and the transparent electrode 800 is mounted on the spacers 600 such that the fluorescent body 900 and the transparent electrode 800 face the conductive polymer film pattern 400. By doing this, the tips of the carbon nanotubes 500, which are vertically bound with the conductive polymer film pattern 400, face the surface of the fluorescent body 900. After the transparent glass substrate 700 is mounted on the spacers 600, vacuum-sealing is performed.

For the carbon nanotubes 500 of the white light source fabricated through the above steps, the diameter of each tip is substantially very small at several nanometers through several tens of nanometers so that emission of electrons in an applied electric field can be achieved even with very low applied voltage.

As described above, the present invention can provide a white light source, which can obtain a large amount of emission current with low applied voltage, by using carbon nanotubes with ends having a very small diameter as electric field electron emission tips. In addition, the present invention can provide a white light source exhibiting excellent luminous efficacy since a very high density of tips per unit area can be achieved. Moreover, the processes of fabricating the white light source are simplified, thereby improving the yield and reliability of products. Accordingly, a next generation high efficient power saving white light source can be provided, replacing an existing fluorescent lamp or glow lamp. The white light source according to the present invention can be extremely miniaturized and has small power consumption so that it can be used as a portable white light source.

Although the invention has been described with reference to a particular embodiment, it will be apparent to one of ordinary skill in the art that modifications of the described embodiment may be made without departing from the spirit and scope of the invention.

## Claims

1. A white light source comprising:
a metal film used as a cathode, the metal film being formed on a lower substrate;
a conductive polymer film pattern formed on the metal film;
carbon nanotubes for emitting electrons, the carbon nanotubes being substantially vertically bound with the conductive polymer film pattern such that one end thereof is exposed above the surface of the conductive polymer film pattern;
spacers mounted on the metal film; and
a transparent upper substrate on which is formed a transparent electrode to which a fluorescent body is attached, the transparent upper substrate being mounted on the spacers such that the fluorescent body faces the carbon nanotubes.

2. A white light source as claimed in claim 1 wherein the lower substrate is formed of glass, quartz, alumina or silicon.

3. A white light source as claimed in claim 1 or 2 wherein the metal film is formed of chrome, titanium, titanium nitride, aluminium or tungsten.

4. A white light source as claimed in any preceding claim wherein the fluorescent body is formed of (3Ca₃(PO₄)₂CaFCl/Sb,Mn) generating a white luminescence, or Y₂O₃: Eu,CeMaA₁₁O₁₉:Tb and BaMg₂Al₁₆O₇:Eu to generate a white luminescence based on three combined emission spectrums.

5. A white light source comprising:
a metal film used as a cathode, the metal film being formed on a lower substrate;
an insulation film pattern provided on the metal film, the insulation film pattern having a plurality of openings selectively exposing the metal film;
a conductive polymer film pattern formed in the openings;
carbon nanotubes for emitting electrons, the carbon nanotubes being substantially vertically bound with the conductive polymer film pattern such that one end thereof is exposed above the surface of the conductive polymer film pattern;
spacers installed on the insulation film pattern; and
a transparent upper substrate on which is formed a transparent electrode to which a fluorescent body is attached, the transparent upper substrate being mounted on the spacers such that the fluorescent body faces the carbon nanotubes.

6. A white light source as claimed in claim 5, wherein the lower substrate is formed of glass, quartz, alumina or silicon.

7. A white light source as claimed in claim 5 or 6 wherein the metal film is formed of chrome, titanium, titanium nitride, aluminium or tungsten.

8. A white light source as claimed in any of claims 5 to 7, wherein the surface of the conductive polymer film pattern is lower than the surface of the insulation film pattern.

9. A white light source as claimed in any of claims 5 to 8, wherein the openings are holes having a diameter of about 1-10µm, and are separated from one another by a distance of about 3-15µm.

10. A white light source as claimed in any of claims 5 to 9, wherein the fluorescent body is formed of (3Ca₃(PO₄)₂CaFCl/Sb,Mn) generating a white luminescence, or Y₂O₃:Eu,CeMaA₁₁O₁₉:Tb and BaMg₂Al₁₆O₇:Eu to generate a white luminescence based on three combined emission spectrums.

11. A method of fabricating a white light source comprising the steps of:
forming a metal film used as a cathode on a lower substrate;
forming an insulation film pattern on the metal film, the insulation film pattern having a plurality of openings selectively exposing the metal film;
filing the openings with a conductive polymer film pattern;
scattering carbon nanotubes on the openings and sinking the carbon nanotubes in the conductive polymer film pattern such that the carbon nanotubes vertically stand with one end being exposed;
hardening the conductive polymer film pattern to bind the sunken carbon nanotubes with the conductive polymer film pattern;
installing spacers on the insulation film pattern; and
mounting a transparent upper substrate on which is formed a transparent electrode to which a fluorescent body is attached on the spacers such that the fluorescent body faces the carbon nanotubes, and sealing the transparent upper substrate with the lower substrate.

12. A method as claimed in claim 11, wherein the lower substrate is formed of glass, quartz, alumina or silicon.

13. A method as claimed in claim 11 or 12, wherein the metal film is formed of chrome, titanium, titanium nitride, aluminium or tungsten.

14. A method as claimed in claim 11, wherein the openings have a diameter of about 1-10µm and are separated from one another by a distance of about 3-15µm.

15. A method as claimed in any of claims 11 to 14, wherein the carbon nanotubes are scattered on the openings by applying direct current bias or supersonic waves to the lower substrate.

16. A method as claimed in any of claims 11 to 15, wherein the openings are filled with the conductive polymer film pattern such that the surface of the conductive polymer film pattern is lower than the surface of the insulation film pattern.

17. A method as claimed in any of claims 11 to 16, wherein the fluorescent body is formed of (3Ca₃(PO₄)₂CaFCl/Sb,Mn) generating a white luminescence, or Y₂O₃:Eu,CeMaA₁₁O₁₉:Tb and BaMg₂Al₁₆O₇:Eu to generate a white luminescence based on three combined emission spectrums.
